# EUROPÄISCHE PATENTSCHRIFT

(11) **EP 2 399 826 B1**
(45) Veröffentlichungstag und Bekanntmachung des Hinweises auf die Patenterteilung: **11.05.2016**
(21) Anmeldenummer: 11168012.0
(22) Anmeldetag: 30.05.2011
(51) Int. Cl.: B64D 9/00

(54) **Befestigungseinrichtung zum zumindest teilweisen Sichern eines ersten und eines zweiten Frachtstücks**
Fixing device for at least partial securing of a first and a second item of freight
Dispositif de fixation pour la fixation au moins partielle d'un premier et d'un second colis

(30) Priorität: 23.06.2010 DE 102010017535
(43) Veröffentlichungstag der Anmeldung: 28.12.2011
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Bohnenberger, Johannes

(56) Entgegenhaltungen:
- EP-A2- 0 434 954
- DE-A1- 2 340 315
- DE-A1- 3 107 745

## Beschreibung

Die Erfindung betrifft eine Befestigungseinrichtung zum zumindest teilweisen Sichern eines ersten und eines zweiten Frachtstücks.

Im Laderaum eines Flugzeuges, insbesondere eines Großraumflugzeuges, werden Frachtstücke (z.B. Container oder Paletten) üblicherweise mittels Rollbahnen bewegt. Befestigungsschienen, welche am Ladedeck des Flugzeugs befestigt sind, dienen zur Aufnahme von Funktionselementen. Derartige Funktionselemente können Befestigungseinrichtungen zum zumindest teilweisen Sichern von Frachtstücken sein. Die Befestigungseinrichtungen können auch unmittelbar in das Ladedeck integriert sein.

Die bereitgestellten Befestigungseinrichtungen müssen robust und dazu geeignet sein, hohe Lasten in das Flugzeugdeck einzuleiten. Des Weiteren sollten derartige Befestigungseinrichtungen sehr einfach zu bedienen sein, da der Belade- und Entladevorgang sehr häufig von Personen durchgeführt werden, die keine Einweisung bezüglich der konkreten Ladevorrichtung genossen haben. Hinzu kommt, dass sowohl das Be- als auch das Entladen unter hohem Zeitdruck geschieht, wodurch es zusätzlich zu Fehlbedienungen kommen kann.

Ein defektes Frachtladesystem - sei es aufgrund einer Fehlbedienung oder aufgrund einer natürlichen Abnutzung - kann zu erheblichen Kosten führen, da das Unterhalten von Großraumflugzeugen sehr teuer ist. Jede Minute, die ein Großraumflugzeug auf dem Boden verbringt, kostet den Betreiber Geld.

Des Weiteren ist zu berücksichtigen, dass bei dem Transport von Ladung per Flugzeug das Gewicht eine entscheidende Rolle spielt. Daher versucht man, das Eigengewicht des Flugzeugs zu minimieren.

Aus der US 5,011,348 ist eine Befestigungseinrichtung bekannt, die sich in der Mitte eines Laderaums entlang der Längsrichtung des Flugzeugs installieren lässt und dort als Führung dient ("center guide"). Die Befestigungseinrichtung verfügt über zwei Riegelkrallen, an denen jeweils eine Riegelnase befestigt ist, die in entgegengesetzte Richtungen zeigen. Die Riegelnasen sind dazu ausgebildet, Teilabschnitte der Frachtstücke zu umgreifen, diese in Querrichtung abzusichern und derart festzuhalten, dass die Frachtstücke nicht aus der Führung gehoben werden. Die Riegelkrallen sind gelenkig an einem Rahmen gelagert, so dass sie sich in Längsrichtung wegklappen lassen, wenn sie von einem Frachtstück überfahren werden. Der damit verbundene Mechanismus ist sehr aufwändig. Die gesamte Konstruktion der Befestigungseinrichtung aus der US 5,011,348 ist sehr groß und bedarf ausreichend Platz. Des Weiteren ist diese Befestigungseinrichtung schwer und so kompliziert aufgebaut, so dass in der rauen Benutzungsumgebung zahlreiche Elemente ausfallen können.

Aus der EP 0 434 954 A2 ist ein Riegelelement zum Arretieren von Frachtstücken nach dem Oberbegriff des Anspruchs 1 bekannt, das im Endeffekt zwei Hauptachsen aufweist, an denen zwei Riegel drehgelenkig gehalten sind. Die beiden Riegel bilden gemeinsam ein Riegelelement zur Halterung von mehreren Frachtcontainern. Das Riegelelement lässt sich aus einer Fixierstellung zum Sichern der entsprechenden Frachtstellung in eine Ruhestellung verschwenken, in der das Riegelelement von den Frachtstücken überfahren werden kann.

Ausgehend von diesem Stand der Technik ist es Aufgabe der vorliegenden Erfindung, eine bessere Befestigungseinrichtung bereitzustellen.

Diese Aufgabe wird durch die Befestigungseinrichtung gemäß Anspruch 1 gelöst.

Ein wesentlicher Vorteil der vorliegenden Erfindung besteht darin, dass die Befestigungseinrichtung sehr kompakt ausgebildet sein kann. Die Riegelkralle umfasst die beiden Riegelnasen und sorgt dafür, dass beide gleichzeitig zwischen der Ruhestellung und der Fixierstellung hin und herbewegt werden können. Der Rampenabschnitt ermöglicht ein automatisches Absenken der Riegelkralle, so dass diese einfach in die Ruhestellung gebracht werden kann. Eine Beschädigung der Befestigungseinrichtung durch schlecht geführte Frachtstücke wird hierdurch ausgeschlossen. Gleichzeitig ist die Riegelkralle sehr stabil und kann auftretende Kräfte gut in das Frachtdeck einleiten.

Die Riegelkralle umfasst ein erstes und ein zweites Riegelelement, wobei das erste Riegelelement derart gelenkig mit dem zweiten Riegelelement verbunden ist, dass das zweite Riegelelement in der Fixierstellung in eine Blockierstellung bringbar ist, in der das zweite Riegelelement die Riegelkralle gegenüber dem Rahmen abstützt. Die Riegelkralle ist also zumindest zweiteilig ausgebildet, wobei sie sich in ein erstes und ein zweites Riegelelement aufgliedert. Beide Riegelelemente sind gelenkig miteinander verbunden, so dass sie sich gegeneinander verschwenken lassen. Das zweite Riegelelement nimmt eine Stützfunktion wahr, so dass die Riegelkralle zum einen über die gelenkige Verbindung, zum anderen über das Aufliegen des zweiten Riegelelements gegenüber dem Rahmen abgestützt wird. Das zweite Riegelelement kann als Stütze dienen, um Kräfte in den Rahmen einzuleiten. Die gelenkige Verbindung des Riegelelements kann dazu verwendet werden, das zweite Riegelelement in eine Freigabeposition zu bewegen, in der sich die Riegelkralle in die Ruhestellung absenken lässt.

Vorzugsweise ist die Querrichtung so definiert, dass sie senkrecht zur Längsrichtung der Befestigungseinrichtung verläuft. Für das Verschwenken der Riegelkralle zwischen der Ruhestellung und der Fixierstellung ist es jedoch nicht notwendig, dass ein entsprechendes Frachtstück exakt aus der Querrichtung auf die Riegelkralle zu fährt.

Vielmehr reicht ein im Wesentlichen seitliches Anfahren aus, um die Riegelkralle zu versenken.

Vorzugsweise zeigen die Riegelnasen in entgegengesetzte Richtungen.

Vorzugsweise wird die Befestigungseinrichtung als Seitenführung im Frachtdeck eingesetzt. Die an der Riegelkralle angeordneten Riegelnasen können sich prinzipiell unterscheiden. Hierbei kann es sich um Drehnasen, starre Nasen oder Doppelnasen handeln.

Die Befestigungseinrichtung kann mindestens ein Federelement umfassen, das die Riegelkralle in die Fixierstellung und/oder das zweite Riegelelement gegenüber dem ersten Riegelelement in die Blockierstellung vorspannt. Es kann also ein Federelement vorgesehen werden, das die Riegelkralle in der Fixierstellung hält. Somit kann die Riegelkralle seitlich durch ein Frachtstück überfahren werden, wobei sie sich sobald das Frachtstück keine Kraft mehr ausübt, wieder in die Fixierstellung bewegt. Es ist nicht notwendig, die Riegelkralle manuell in die Fixierstellung zu bringen.

Zusätzlich oder stattdessen kann ein Federelement vorgesehen werden, das das zweite Riegelelement gegenüber dem ersten Riegelelement in die Blockierstellung vorspannt. Somit stützt sich das zweite Riegelelement in der Fixierstellung stets auf dem Rahmen ab und erlaubt es der Riegelkralle, Kräfte aus den hierfür vorgesehenen Richtungen in den Rahmen einzuleiten. Nur bei einer manuellen Betätigung oder bei einer Betätigung durch ein Frachtstück, das seitlich an die Riegelkralle heranfährt, wird die Blockierstellung verlassen.

Das zweite Riegelelement kann mindestens eine Raste umfassen, die derart angeordnet ist, dass die Raste in der Ruhestellung mit einem Abschnitt des Rahmens in Eingriff bringbar ist, um die Riegelkralle in der Ruhestellung zu halten. Es gibt Anwendungen, bei denen es vorteilhaft ist, wenn die Riegelkralle in ihrer Ruhestellung verbleibt. Beispielsweise bei der Beladung des Frachtdecks mit einem Fahrzeug. Hierfür kann eine Raste vorgesehen werden, die es ermöglicht, die Riegelkralle in der Ruhestellung zu fixieren. Vorzugsweise ist dieser Rastmechanismus derart angeordnet, dass es bei einem Überfahren der Riegelkralle durch ein Frachtstück nicht zu einem automatischen Einrasten kommt. Vielmehr muss eine zusätzliche Kraft aufgebracht werden, so dass die Riegelkralle in der Ruhestellung fixiert wird.

Beispielsweise kann ein automatisches Einrasten dann erfolgen, wenn die Riegelkralle nicht nur derart weit abgesenkt wird, dass sie durch das Frachtstück überfahrbar ist, sondern in eine tiefere Position, beispielsweise eine Einrastposition, gebracht wird.

Das zweite Riegelelement kann zum Abstützen der Riegelkralle mindestens einen in Längsrichtung konvexen Stützabschnitt umfassen. Der Rahmen kann mindestens eine konkave Aufnahme, insbesondere mit einem Fortsatz, umfassen, um den Stützabschnitt aufzunehmen und die Riegelkralle in der Fixierstellung zu blockieren. Die abgerundete Ausbildung des Stützabschnitts ermöglicht ein Verschwenken des Riegelelements, beispielsweise aus der Blockierstellung, ohne dass es hier zu einem Verklemmen kommen kann. Zusätzlich erhöht die konkave Ausgestaltung des Rahmens, in die der konvexe Stützabschnitt eingreift, die Kontaktfläche zwischen dem Rahmen und dem zweiten Riegelelement, so dass höhere Kräfte, insbesondere entlang des zweiten Riegelelements, sicher eingeleitet werden.

Der mindestens eine Rampenabschnitt kann derart ausgebildet und angeordnet sein, dass das heranfahrende Frachtstück eine Rotationsbewegung um eine das erste Riegelelement und das zweite Riegelelement verbindende Rotationsachse induziert. Vorzugsweise ist die drehgelenkige Verbindung zwischen der Riegelkralle und dem Rahmen mittels eines Drehgelenks umgesetzt, wobei das Verschwenken zwischen der Fixierstellung und der Ruhestellung durch eine Rotationsbewegung um die zugehörige Rotations- bzw. Hauptachse gewährleistet wird. Der mindestens eine Rampenabschnitt kann derart gegenüber der Hauptachse versetzt angeordnet sein, so dass ein heranfahrendes Frachtstück, das auf den Rampenabschnitt auffährt, eine Rotationsbewegung um die Hauptachse induziert.

Der Rahmen kann mindestens eine erste Schiene und eine zweite Schiene umfassen, in denen die Riegelkrallen drehbeweglich gelagert sind, wobei die Schienen eine Führung und mindestens eine Rasteinrichtung umfassen, in der die Riegelkralle, insbesondere eine Hauptachse dieser, in Längsrichtung verschiebbar angeordnet ist. Somit lässt sich die Riegelkralle also innerhalb des Rahmens beispielsweise zwischen einer ersten und einer zweiten Position verschieben. In jeder dieser Positionen kann die Riegelkralle zum Umgreifen und Halten eines Teilabschnitts der Frachtstücke eingesetzt werden und somit die Frachtstücke sichern. In einer Ausführungsform lässt sich hierfür die Hauptachse innerhalb der Schienen des Rahmens hin und her bewegen und an bestimmten vorgegebenen Positionen einrasten. Somit kann die Befestigungseinrichtung im Frachtdeck dazu verwendet werden, dieses für unterschiedliche Frachtstücke auszurüsten. Beispielsweise kann durch das Verschieben der Riegelkralle die Befestigungseinrichtung an die Breite der Frachtstücke angepasst werden. Somit kann dieselbe Riegelkralle an unterschiedlichen Positionen verwendet werden, während bei herkömmlichen Einrichtungen stattdessen mehrere Befestigungseinrichtungen vorgesehen waren. Dies kann zu erheblichen Gewichtsersparnissen führen.

Die Hauptachse kann eine Hülse mit mindestens einem in dieser beweglich angeordneten Zapfen umfassen, der zum Fixieren der Riegelkralle in eine am Rahmen angeordnete Aussparung eingreift. Es ist möglich, die oben genannte Rasteinrichtung so auszubilden, dass diese neben der Hauptachse angreift. Vorzugsweise rastet aber ein Teil der Hauptachse selbst in hierfür vorgesehene Aussparungen ein. Beispielsweise können zwei Zapfen, die innerhalb einer Hülse der Hauptachse gelagert sind, wechselseitig der Hauptachse in den Rahmen eingreifen und somit die Hauptachse fixieren. Eine Rotation der Riegelkralle um die Hauptachse wird hierdurch nicht eingeschränkt.

Das zweite Riegelelement kann im Querschnitt eine im Wesentlichen trapezförmige Ausgestaltung haben, um die Riegelkralle auf dem Rahmen abzustützen. Vorzugsweise erfolgt eine Abstützung auf der ersten und zweiten Schiene mittels eines ersten und zweiten Stützabschnitts, der auch den oder die Rampenabschnitte aufweist. Die trapezförmige Ausgestaltung ermöglicht eine geeignete Krafteinleitung. Das zweite Riegelelement kann als eine Art Rahmen oder Manschette ausgebildet sein, der/die das erste Riegelelement zumindest teilweise umschließt. Somit kann die Riegelkralle wesentlich kompakter ausgestaltet werden.

Die Riegelkralle kann einen ersten Anschlag umfassen, der in der Fixierstellung derart korrespondierend zu einem zweiten Anschlag am Rahmen ausgebildet ist, dass eine in der Fixierstellung auf die Riegelkralle einwirkende Hubkraft in den Rahmen einleitbar ist. Beispielsweise kann die in den Schienen geführte Hauptachse derart ausgestaltet werden, dass ein Verschwenken zwischen der Ruhestellung und der Fixierstellung möglich ist. Sobald die Fixierstellung jedoch erreicht wird, liegt der erste Anschlag derart am zweiten Anschlag an, dass eine weiterführende Drehbewegung um die Hauptachse nicht mehr möglich ist. Somit können Kräfte, die auf die Riegelkralle wirken, effizient in den Rahmen eingeleitet werden.

Weitere bevorzugte Ausführungsbeispiele ergeben sich anhand der Unteransprüche.

Nachfolgend wird die Erfindung mittels mehrerer Ausführungsbeispiele beschrieben, die anhand mehrerer Abbildungen näher erläutert werden.

Hierbei zeigen:
- Fig. 1: eine perspektivische Ansicht einer Befestigungseinrichtung mit einer Riegelkralle;
- Fig. 2: eine Draufsicht auf die Befestigungseinrichtung aus Fig. 1;
- Fig. 3: eine Seitenansicht der Befestigungseinrichtung aus Fig. 1;
- Fig. 4: einen Längsschnitt durch die Befestigungseinrichtung aus Fig. 1, wobei sich die Riegelkralle in einer Fixierstellung befindet;
- Fig. 5: einen Längsschnitt durch die Befestigungseinrichtung aus Fig. 1, wobei sich die Riegelkralle in einer Ruhestellung befindet;
- Fig. 6: eine Frontansicht der Befestigungseinrichtung aus Fig. 1;
- Fig. 7: eine schematische Seitenansicht der Befestigungseinrichtung aus Fig. 1, wobei sich die Riegelkralle in der Fixierstellung befindet;
- Fig. 8: eine schematische Seitenansicht der Befestigungseinrichtung aus Fig. 1, wobei die Riegelkralle aufgrund eines heranfahrenden Frachtstücks zumindest teilweise verkippt ist;
- Fig. 9: eine Seitenansicht der Befestigungseinrichtung aus Fig. 1, wobei die Riegelkralle teilweise abgesenkt ist;
- Fig. 10: eine Seitenansicht der Befestigungseinrichtung aus Fig. 1, wobei sich die Riegelkralle in der Ruhestellung befindet;
- Fig. 11: eine schematische Ansicht der Riegelkralle der Befestigungseinrichtung aus Fig. 1; und
- Fig. 12: eine Seitenansicht einer weiteren Befestigungseinrichtung.

In der nachfolgenden Beschreibung werden für gleiche und gleich wirkende Teile dieselben Bezugsziffern verwendet.

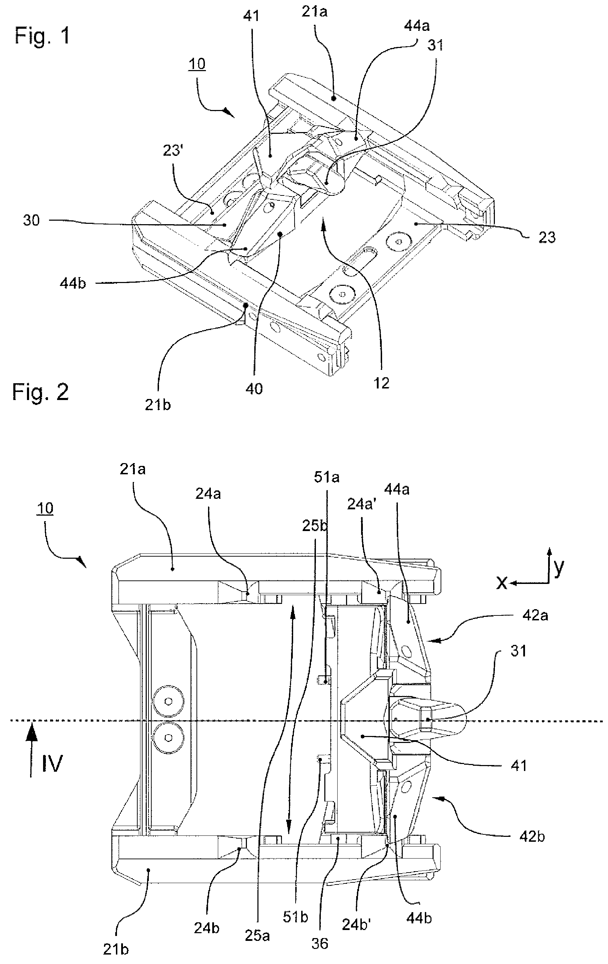

Fig. 1 verdeutlicht den groben Aufbau einer erfindungsgemäßen Befestigungseinrichtung 10, die einen Rahmen 20 und eine darin drehbeweglich gelagerte Riegelkralle 12 umfasst. Der Rahmen 20 untergliedert sich in eine erste Schiene 21a und eine zweite Schiene 21b, die im Wesentlichen parallel zueinander angeordnet sind und eine Längsrichtung X vorgeben. Die beiden Schienen 21a, 21b sind durch zwei parallel angeordnete Verstrebungen 23, 23' miteinander verbunden. Diese Verstrebungen 23, 23' umfassen Befestigungseinrichtungen, um den Rahmen 20 mit dem Frachtdeck zu verbinden. Die Riegelkralle 12 weist ein erstes Riegelelement 30 und ein zweites Riegelelement 40 auf. Das erste Riegelelement 30 und das zweite Riegelelement 40 sind miteinander drehbeweglich verbunden. Die Riegelkralle 12 verfügt über eine erste Riegelnase 31 und eine zweite Riegelnase 41, wobei in dem beschriebenen Ausführungsbeispiel die erste Riegelnase 31 an dem ersten Riegelelement 30 und die zweite Riegelnase 41 an dem zweiten Riegelelement 40 befestigt ist. Die Riegelnasen 31, 41 weisen jeweils in entgegengesetzte Richtungen und sind entlang der Längsrichtung X ausgerichtet. Das zweite Riegelelement 40 bildet eine Art Rahmen oder Manschette, der/die das erste Riegelelement 30 umgreift. Dieser Rahmen setzt sich aus der zweiten Riegelnase 41, einem ersten Rampenabschnitt 44a und einem zweiten Rampenabschnitt 44b zusammen. Die Rampenabschnitte 44a, 44b verlaufen im Wesentlichen in Querrichtung Y, quer zur Längsrichtung X der Befestigungseinrichtung, 10 und sind, wie in der Fig. 2 gezeigt, gegenüber einer von den Schienen 21a, 21b aufgespannten Ebene derart geneigt, dass ein seitlich an die Riegelkralle 12 heranfahrendes Frachtstück eine Rotationsbewegung der Riegelkralle 12 innerhalb des Rahmens 20 induziert. Die Rampenabschnitte 44a, 44b können einen Neigungswinkel gegenüber der aufgespannten Ebene von kleiner 60°, insbesondere kleiner 50°, insbesondere kleiner 45°, haben.

Die gelenkige Verbindung zwischen der Riegelkralle 12, konkreter gesagt dem ersten Riegelelement 30, und dem Rahmen 20 wird durch ein Drehgelenk mit einer Hauptachse 36 umgesetzt. Die Hauptachse 36 ist in der Fig. 2 schematisch angedeutet.

Die erfindungsgemäße Befestigungseinrichtung 10 ermöglicht ein Verschwenken der Riegelkralle zwischen der Fixierstellung und der Ruhestellung. In der Fixierstellung kann die Befestigungseinrichtung 10 Frachtstücke halten und fixieren, die von hinten oder vorne (in Längsrichtung) an die Riegelkralle herangefahren werden. In der Ruhestellung wird die Riegelkralle 12 in den Rahmen 20 versenkt, so dass ein Überfahren der Befestigungseinrichtung 10 möglich ist.

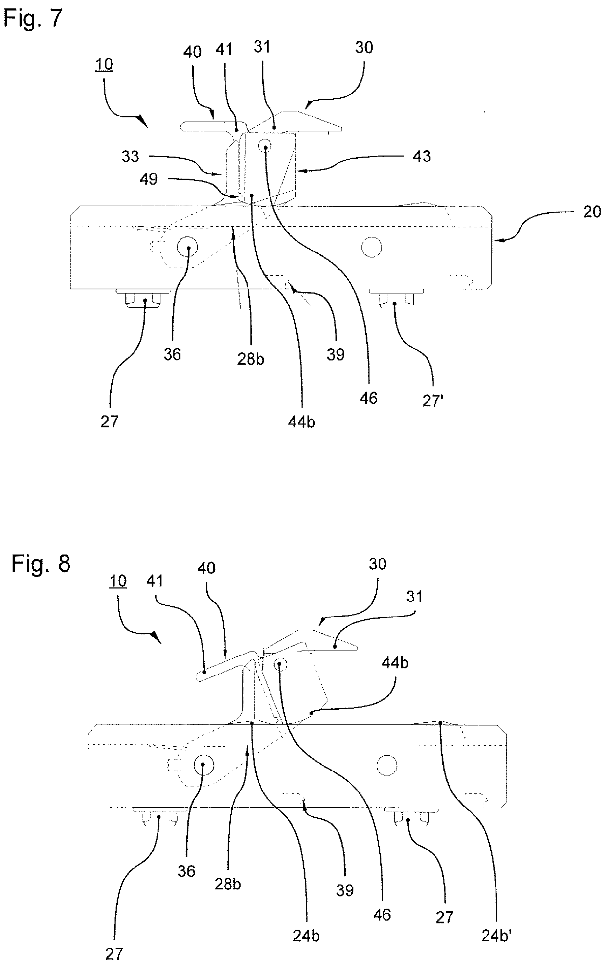

Der Verschwenkvorgang zwischen der Fixierstellung und der Ruhestellung wird nachfolgend anhand der Fig. 7 bis 10 näher erläutert. Die Fig. 7 zeigt die Riegelkralle 12 in der Fixierstellung, wobei sich die Riegelnasen 31, 41 im Wesentlichen parallel zur Längsrichtung X erstrecken. Die Riegelkralle 12 bildet in Verbindung mit dem Rahmen 20 jeweils ein erstes und ein zweites U-Profil zur Aufnahme von Teilabschnitten der Frachtstücke aus. Das erste U-Profil wird durch die erste Riegelnase 31, einem am zweiten Riegelelement 40 befindlichen Anschlag 43 und den Schienen 21a und 21b gebildet. Ein in die entgegengesetzte Richtung offenes zweites U-Profil umfasst die zweite Riegelnase 41, einen am ersten Riegelelement 30 angeordneten Anschlag 33 und die Schienen 21a, 21b. In der Seitenansicht (z. B. Fig. 7) bilden die Riegelnasen 31, 41 mit Abschnitten der Riegelelementen 30, 40 ein T-Profil aus.

Wie anhand der Fig. 7 ersichtlich, ist das erste Riegelelement 30 über eine Drehachse 46 mit dem zweiten Riegelelement 40 verbunden. In Fig. 7 befindet sich das zweite Riegelelement 40 gegenüber dem ersten Riegelelement 30 in einer Blockierstellung, wobei konvexe Stützabschnitte der Rampenabschnitte 44a, 44b flächig auf dem Rahmen 20, insbesondere auf daran vorgesehenen Fortsätzen 24a, 24b (vgl. Fig. 2), aufliegen. In dieser Fixierstellung sind Abschnitte der Riegelkralle 12, nämlich das ausgebildete T-Profil, derart gegenüber der Hauptachse 36 in Längsrichtung versetzt, dass die auf dem Rahmen 20 aufliegenden Rampenabschnitte 44a, 44b ein Blockierglied bilden, so dass eine Rotation im Uhrzeigersinn (ausgehend von der Seitenansicht der Fig. 7) nicht möglich ist. Insofern leiten die Rampenabschnitte 44a, 44b am ersten Anschlag 33 auftretende Kräfte unmittelbar in den Rahmen 20 ein.

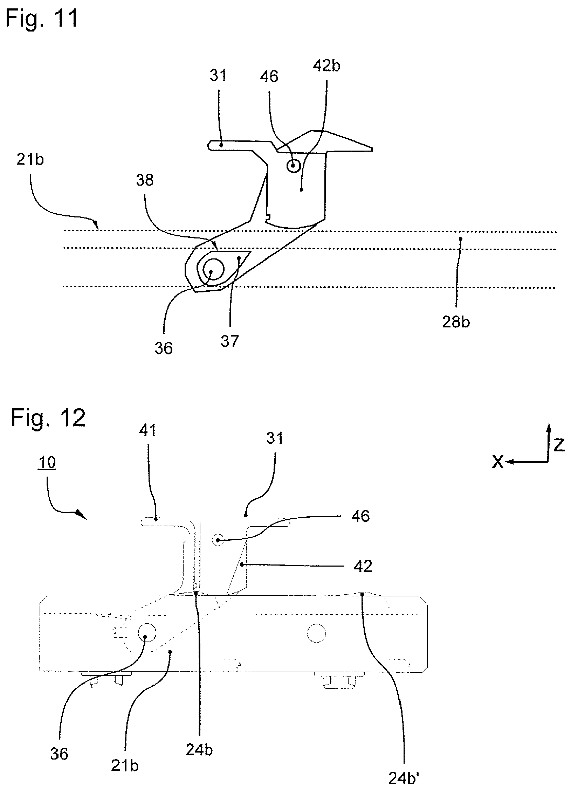

Eine Rotation gegen den Uhrzeigersinn (ausgehend von der Seitenansicht der Fig. 7) wird durch die Oberführungen 28a, 28b der Schienen 21a, 21b und der besonderen Ausgestaltung der Hauptachse 36 verhindert. So hat, wie in der Fig. 11 verdeutlicht, das erste Riegelelement 30 an jeder Seite in unmittelbarer Nachbarschaft zu den Schienen 21a, 21b einen Hauptachsenfortsatz 37 mit einem Hauptachsenanschlag 38, der in der Fixierstellung im Wesentlichen parallel zu den Oberführungen 28a, 28b verläuft, um die besagte Rotation gegen den Uhrzeigersinn zu verhindern. Der Hauptachsenanschlag 38 ist hierbei derart ausgebildet, dass eine Rotation im Uhrzeigersinn nicht verhindert wird.

Fährt nun ein Frachtstück seitlich an die Riegelkralle 12 heran, so führt dies aufgrund der Rampenabschnitte 44a, 44b zu einer Rotationsbewegung des zweiten Riegelelements 40 gegenüber dem ersten Riegelelement 30. Die zweite Riegelnase 41 neigt sich nach unten ab, wobei die Rampenabschnitte 44a, 44b angehoben werden. Dies ist in der Fig. 8 dargestellt. Durch das Kippen (Rotation gegen den Uhrzeigersinn) des zweiten Riegelelements 40 wandern die konvexen Stützabschnitte derart nach außen (bezüglich der Hauptachse 36), dass diese nicht mehr auf den Fortsätzen 24a, 24b aufliegen. Der Rahmen 20 enthält Rahmenaussparungen 25a, 25b (Fig. 2), die derart ausgebildet sind, dass die Rampenabschnitte 44a, 44b zwischen die Schienen 21a, 21b passen. Während der Abstand der Fortsätze 24a, 24b (aber auch 24a', 24b') mit entsprechend daran angeordneten Auflageflächen so gewählt ist, dass dieser kleiner ist als die maximale Breite des zweiten Riegelelements 41, ist der Abstand bei den Rahmenaussparungen 25a, 25b deutlich größer, so dass die Riegelkralle 12 mit den Rampenabschnitten 44a, 44b von dem Rahmen 20 aufgenommen werden können.

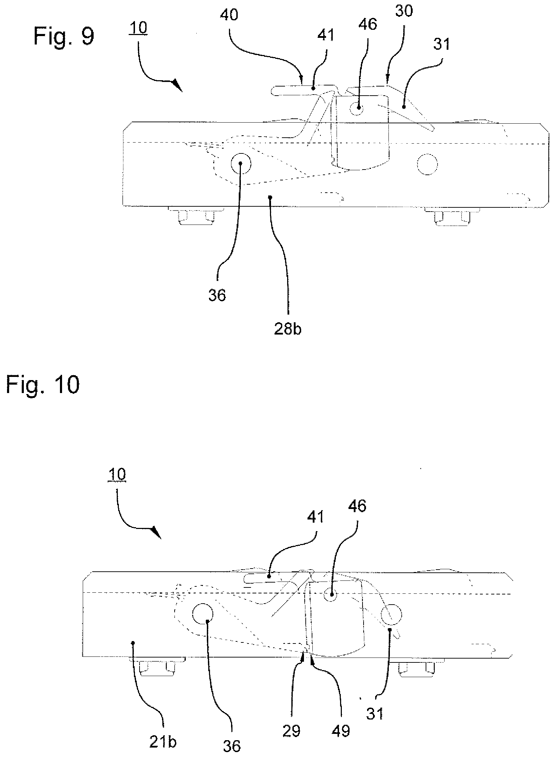

Wie in der Fig. 9 gezeigt, kann die Riegelkralle 12 also zwischen die Schienen 21a, 21b gleiten und eine Ruhestellung (vgl. Fig. 10) einnehmen. In einem bevorzugten Ausführungsbeispiel weist das erste Riegelelement 30 Federelemente auf, die die Riegelkralle in die Fixierstellung vorspannen. Insofern ist eine Haltekraft notwendig, um die Riegelkralle in der in Fig. 10 gezeigten Position (Ruhestellung) zu halten. Sobald diese Haltekraft nicht mehr vorhanden ist (z.B. weil das Frachtstück die Riegelkralle passiert hat), schwenkt diese in ihre Ausgangsstellung (vgl. Fig. 7) zurück.

Um die Riegelkralle 12 dauerhaft in der Ruhestellung zu verankern, weisen die Rampenabschnitte 44a, 44b jeweils Aussparungen 49 auf, die in am Rahmen 20 befindliche Fortsätze 29 eingreifen.

Auch die Drehachse 46 weist Federelemente auf. Diese spannen das zweite Riegelelement 40 in der Fixierstellung in eine Blockierstellung (vgl. Fig. 7) vor. In der Ruhestellung (vgl. Fig. 10) wirken diese Federelemente derart, dass die Aussparungen 49 sicher in die Fortsätze 29 eingreifen. Um die fixierte Ruhestellung zu erreichen, ist es notwendig, dass die Riegelkralle derart weit heruntergedrückt wird, dass sie eine Stellung einnimmt, die unterhalb der Ruhestellung liegt. Dies kann beispielsweise dadurch gewährleistet werden, dass ein manueller Druck auf die Riegelkralle 12 ausgeübt wird. Ein Überfahren der Riegelkralle durch ein Frachtstück reicht üblicherweise nicht aus, um das Einrasten der Fortsätze 29 in die Aussparungen 49 zu gewährleisten. Da die zweite Riegelnase 41 drehfest mit den Rampenabschnitten 44a, 44b verbunden ist, kann die Fixierung mittels der Fortsätze 29 und der Aussparungen 49 durch ein Eindrücken der zweiten Riegelnase 41 aufgelöst werden. Die Riegelkralle gleitet dann zurück in die Fixierstellung.

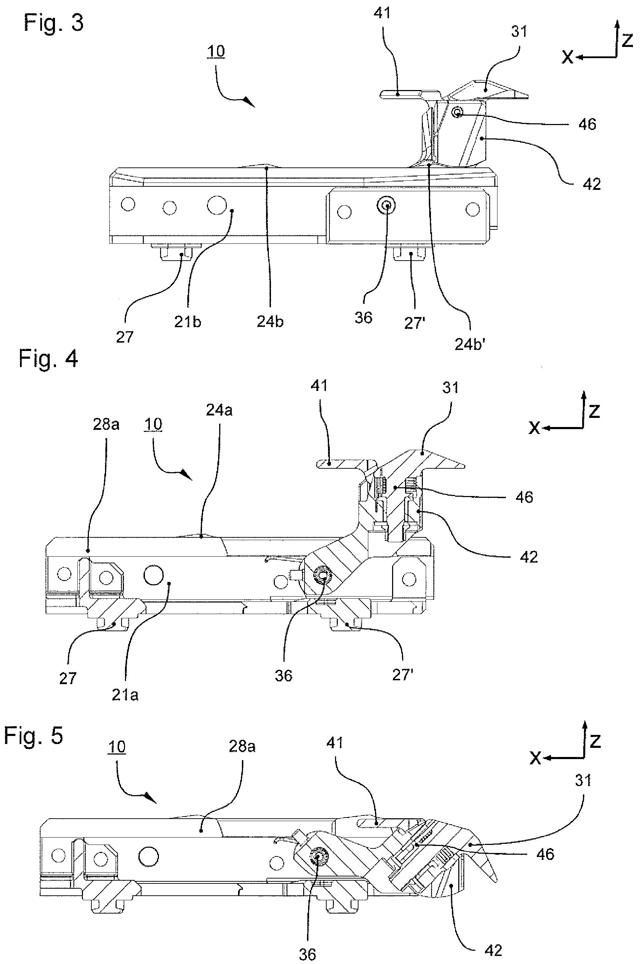

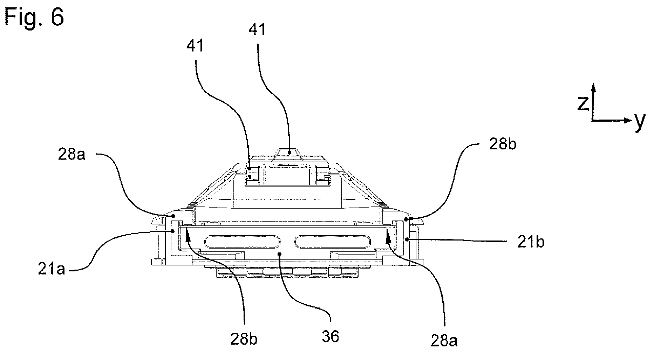

Die Fig. 6 verdeutlicht die Ausgestaltung der ersten Schiene 21a und der zweiten Schiene 21b. So bilden diese im Querschnitt ein U-Profil, wobei die oberen Schenkel durch die erste Oberführung 28a (erster Schenkel 21a) und zweite Oberführung 28b (zweite Schiene 21b) gebildet werden. Der Hauptachsenanschlag 38 aus Fig. 11 nutzt diese Oberführungen 28a, 28b als Gegenanschlag. Anhand der Fig. 6 ist ersichtlich, dass sich die durch die Schienen 21a, 21b gebildeten Führungen über die gesamte Länge des Rahmens 20 erstrecken und diese die Hauptachse 36 aufnehmen. In einer Ausführungsform der vorliegenden Erfindung lässt sich die Riegelkralle 12 innerhalb dieser Führung der Schienen 21a, 21b verschieben. So zeigt die Fig. 1 die Riegelkralle 12 in einer ersten Position und die Fig. 2 die Riegelkralle 12 in einer zweiten Position. Die Hauptachse 36 enthält Zapfen, die in Bohrungen in den Schienen 21a, 21b einrasten. Diese Zapfen sind hierfür mittels weiterer Federelemente so vorgespannt, dass ein erster Zapfen gegen die erste Schiene 21a und ein zweiter Zapfen gegen die zweite Schiene 21b oder in die dort vorgesehenen Bohrungen gedrückt wird. Die Betätigungselemente 51a, 51b (vgl. Fig. 2) ermöglichen es, die Zapfen aus ihrer Rastposition herauszuführen und somit die Riegelkralle 12 derart zu entriegeln, dass sich diese entlang der Längsachse X verschieben lässt. Korrespondierend zu der ersten und der zweiten Position der Riegelkralle 12 weist der Rahmen 20 die Fortsätze 24a, 24a', 24b, 24b' auf (vgl. Fig. 2 und 3). Des Weiteren können weitere Rahmenaussparungen 25a, 25b vorgesehen werden.

Die Fig. 4 und 5 verdeutlichen den Aufbau der Riegelkralle 12 näher. So handelt es sich bei der ersten Riegelnase 41 im beschriebenen Ausführungsbeispiel um eine Drehnase.

Die Fig. 12 verdeutlicht, dass sich der erfindungswesentliche Gedanke auch in verschiedenen Variationen umsetzen lässt. So zeigt die Fig. 12 eine Befestigungseinrichtung 10, bei der die erste Riegelnase 31 und die zweite Riegelnase 41 beide am zweiten Riegelelement 40 angeordnet sind. Das zweite Riegelelement 40 hat in der gezeigten Seitenansicht eine T-Form und bildet das bereits beschriebene T-Profil, wobei die Riegelnasen 31, 41 integral mit den Rampenabschnitten 44a, 44b verbunden sind und über diese in Längsrichtung X hinausragen.

### Bezugszeichenliste

- 10: Befestigungseinrichtung
- 12: Riegelkralle
- 20: Rahmen
- 21a, 21b: Schiene
- 23, 23': Verstrebung
- 24a, 24a', 24b, 24b': Fortsatz
- 25a, 25b: Rahmenaussparung
- 27, 27': Verankerungsschiene
- 28a, 28b: Oberführung
- 29: Fortsatz
- 30: erstes Riegelelement
- 31: erste Riegelnase
- 33: erster Anschlag
- 36: Hauptachse
- 37: Hauptachsenfortsatz
- 38: Hauptachsenanschlag
- 40: zweites Riegelelement
- 41: zweite Riegelnase
- 43: Anschlag
- 44a, 44b: Rampenabschnitt
- 46: Drehachse
- 49: Aussparung
- 51a, 51b: Betätigungselement

## Patentansprüche

1. Befestigungseinrichtung zum zumindest teilweisen Sichern eines ersten und eines zweiten Frachtstücks, umfassend:
- einen Rahmen (20),
- eine Riegelkralle (12) mit einer ersten Riegelnase (31) und einer zweiten Riegelnase (41), die zum Umgreifen und Halten von Teilabschnitten der Frachtstücke entlang einer Längsrichtung (X) der Befestigungseinrichtung ausgerichtet sind,
wobei die Riegelkralle (12) derart gelenkig am Rahmen (20) befestigt ist, dass die Riegelkralle (12) um eine Hauptachse (36) aus einer Fixierstellung zum Sichern der Frachtstücke in eine Ruhestellung verschwenkbar ist, wobei die Riegelkralle (12) mindestens einen Rampenabschnitt (44a, 44b) umfasst und derart ausgebildet ist, dass die Riegelkralle (12) durch ein in Querrichtung (Y) heranfahrendes Frachtstück aus der Fixierstellung in die Ruhestellung verschwenkbar ist,
wobei die Riegelkralle (12) ein erstes Riegelelement (30) und ein zweites Riegelelement (40) mit mindestens einer Riegelnase (41) umfasst, wobei das erste Riegelelement (30) derart gelenkig mit dem zweiten Riegelelement (40) verbunden ist, und der mindestens eine Rampenabschnitt (44a, 44b) derart ausgebildet und angeordnet ist,
a) dass das zweite Riegelelement (40) in der Fixierstellung der Riegelkralle (12) in eine Blockierstellung bringbar ist, und
b) dass das heranfahrende Frachtstück eine Rotationsbewegung des zweiten Riegelelements (40) um eine das erste Riegelelement (30) und das zweite Riegelelement (40) verbindende Rotationsachse (46) induziert,
**dadurch gekennzeichnet, dass** in der Blockierstellung des zweiten Riegelelements (40) die Riegelkralle (12) zum einen über die gelenkige Verbindung der Riegelelemente, zum anderen über ein Aufliegen des zweiten Riegelelements auf dem Rahmen gegenüber dem Rahmen abgestützt ist.

2. Befestigungseinrichtung nach Anspruch 1, **gekennzeichnet durch** mindestens ein Federelement, das die Riegelkralle (12) in die Fixierstellung und/oder das zweite Riegelelement (40) gegenüber dem ersten Riegelelement (30) in die Blockierstellung vorspannt.

3. Befestigungseinrichtung nach einem der vorhergehenden Ansprüche, **dadurch gekennzeichnet, dass** das zweite Riegelelement (40) mindestens eine Raste (49) umfasst, die derart angeordnet ist, dass die Raste (49) in der Ruhestellung mit einem Abschnitt (39) des Rahmens (20) in Eingriff bringbar ist, um die Riegelkralle (12) in der Ruhestellung zu halten.

4. Befestigungseinrichtung nach einem der vorhergehenden Ansprüche, **dadurch gekennzeichnet, dass** das zweite Riegelelement (40) zum Abstützen der Riegelkralle (12) mindestens einen in Längsrichtung (X) konvexen Stützabschnitt umfasst.

5. Befestigungseinrichtung nach Anspruch 4, **dadurch gekennzeichnet, dass** der Rahmen (20) mindestens eine konkave Aufnahme, insbesondere mit einem Fortsatz (24a, 24a', 24b, 24b'), umfasst, um den Stützabschnitt aufzunehmen und die Riegelkralle (12) in der Fixierstellung zu blockieren.

6. Befestigungseinrichtung nach einem der vorhergehenden Ansprüche, **dadurch gekennzeichnet, dass** der Rahmen (20) mindestens eine erste Schiene (21a) und eine zweite Schiene (21b) umfasst, in denen die Riegelkralle (12) drehbeweglich gelagert ist, wobei die Schienen (21a, 21b) eine Führung und mindestens eine Rasteinrichtung umfassen, in der die Riegelkralle (12) in Längsrichtung (X) verschiebbar angeordnet ist.

7. Befestigungseinrichtung nach Anspruch 6,
**dadurch gekennzeichnet, dass**
die Hauptachse (36) eine Hülse mit mindestens einem in dieser beweglich angeordneten Zapfen umfasst, der zum Fixieren der Riegelkralle (12) in eine am Rahmen angeordnete Aussparung eingreift.

8. Befestigungseinrichtung nach Anspruch 6 oder 7,
**dadurch gekennzeichnet, dass**
die Hauptachse (36) zwei Zapfen und mindestens ein Federelement umfasst, das derart mit den Zapfen in Wirkverbindung steht, dass die Zapfen in an dem Rahmen (20) angeordnete Aussparungen einrasten.

9. Befestigungseinrichtung nach einem der vorhergehenden Ansprüche,
**dadurch gekennzeichnet, dass**
das zweite Riegelelement (40) im Querschnitt eine im Wesentlichen trapezförmige Ausgestaltung hat, um die Riegelkralle (12) auf dem Rahmen abzustützen.

10. Befestigungseinrichtung nach einem der vorhergehenden Ansprüche,
**dadurch gekennzeichnet, dass**
die Riegelkralle (12) einen ersten Anschlag umfasst, der in der Fixierstellung derart korrespondierend zu einem zweiten Anschlag am Rahmen (20) ausgebildet ist, dass eine in der Fixierstellung auf die Riegelkralle (12) einwirkende Hubkraft in den Rahmen einleitbar ist.

## Claims

1. Fixing device for at least partially securing a first and a second item of freight, comprising:
- a frame (20),
- a locking claw (12) having a first locking lug (31) and a second locking lug (41) which are arranged to encompass and hold partial segments of the items of freight along a longitudinal direction (X) of the fixing device,
wherein the locking claw (12) is articulated to the frame (20) such that the locking claw (12) is pivotable about a main axis (36) from a fixing position for securing the items of freight into a rest position, wherein the locking claw (12) comprises at least one ramp segment (44a, 44b) and is formed such that the locking claw (12) is pivotable from the fixing position into the rest position by an item of freight approaching in the transverse direction (Y), wherein the locking claw (12) comprises a first locking element (30) and a second locking element (40) having at least one locking lug (41), wherein the first locking element (30) is linked with the second locking element (40) in such an articulated manner, and the at least one ramp segment (44a, 44b) is formed and disposed in such a manner,
a) that, in the locking claw's (12) fixing position, the second locking element (40) can be brought into a blocking position, and
b) that the approaching item of freight induces a rotational movement of the second locking element (40) about a rotation axis (46) connecting the first locking element (30) and the second locking element (40),
**characterised in that** in the locking element's (40) blocking position, the locking claw (12) is supported with respect to the frame via the articulated link of the locking elements on the one hand, and via the second locking element resting upon the frame, on the other.

2. Fixing device according to claim 1, **characterised by**
at least one spring element which biases the locking claw (12) into the fixing position and/or the second locking element (40) with respect to the first locking element (30) into the blocking position.

3. Fixing device according to any one of the preceding claims,
**characterised in that**
the second locking element (40) comprises at least one catch (49) which is disposed such that the catch (49) in the rest position can be engaged with a portion (39) of the frame (20) so as to hold the locking claw (12) in the rest position.

4. Fixing device according to any one of the preceding claims,
**characterised in that**
the second locking element (40) comprises at least one supporting segment that is convex in the longitudinal direction (X) for supporting the locking claw (12).

5. Fixing device according to claim 4,
**characterised in that**
the frame (20) comprises at least one concave reception, optionally including a protrusion (24a, 24a', 24b, 24b'), to receive the supporting segment and block the locking claw (12) in the fixing position.

6. Fixing device according to any one of the preceding claims,
**characterised in that**
the frame (20) comprises at least one first rail (21a) and a second rail (21b), in which the locking claw (12) is mounted to be rotatable, wherein the rails (21a, 21b) comprise a guide and at least one catching device in which the locking claw (12) is disposed so as to be displaceable in the longitudinal direction (X).

7. Fixing device according to claim 6,
**characterised in that**
the main axis (36) comprises a sleeve having at least one pin disposed therein to be movable which engages into a recess disposed on the frame for fixing the locking claw (12).

8. Fixing device according to claim 6 or 7,
**characterised in that**
the main axis (36) comprises two pins and at least one spring element which is in operative connection with the pins such that the pins snap into recesses disposed on the frame (20).

9. Fixing device according to any one of the preceding claims,
**characterised in that**
the second locking element (40) has a substantially trapezoidal configuration in cross-section so as to support the locking claw (12) on the frame.

10. Fixing device according to any one of the preceding claims,
**characterised in that**
the locking claw (12) comprises a first stop which, when in the fixing position, is formed to be corresponding to a second stop on the frame (20) such that a lifting force acting upon the locking claw (12) in the fixing position can be introduced into the frame.

## Revendications

1. Moyen de fixation pour bloquer au moins partiellement un premier et un second article de fret, incluant :
- un cadre (20),
- une griffe de verrouillage (12) avec un premier ergot de verrouillage (31) et un second ergot de verrouillage (41), qui sont orientés pour enserrer et maintenir des portions partielles des articles de fret le long d'une direction longitudinale (X) du moyen de fixation,
dans lequel la griffe de verrouillage (12) est fixée avec articulation sur le cadre (20) de telle manière que la griffe de verrouillage (12) est capable de pivoter autour d'un axe principal (36) hors d'une position de fixation pour bloquer les articles de fret jusque dans une position de repos, dans lequel la griffe de verrouillage (12) inclut au moins une portion en rampe (44a, 44b) et est réalisée de telle manière que la griffe de verrouillage (12) est susceptible d'être pivotée hors de la position de fixation jusque dans la position de repos par un article de fret qui s'approche en direction transversale (Y), dans lequel la griffe de verrouillage (12) inclut un premier élément de verrou (30) et un second élément de verrou (40) avec au moins un ergot de verrouillage (41), dans lequel le premier élément de verrou (30) est relié avec articulation au second élément de verrou (40) de telle façon, et ladite au moins une portion en rampe (44a, 44b) est réalisée et agencée de telle manière que
a) le second élément de verrou (40) est susceptible d'être amené, dans la position de fixation de la griffe de verrouillage (12), jusque dans une position de blocage, et
b) l'article de fret qui s'approche induit un mouvement de rotation du second élément de verrou (40) autour d'un axe de rotation (46) qui relie le premier élément de verrou (30) et le second élément de verrou (40), **caractérisé en ce que**
dans la position de blocage du second élément de verrou (40) la griffe de verrouillage (12) est soutenue par rapport au cadre d'une part via la liaison avec articulation des éléments de verrou et d'autre part via un appui du second élément de verrou sur le cadre.

2. Moyen de fixation selon la revendication 1,
**caractérisé par** au moins un élément à ressort, qui précontraint la griffe de verrouillage (12) jusque dans la position de fixation et/ou le second élément de verrou (40) par rapport au premier élément de verrou (30) jusque dans la position de blocage.

3. Moyen de fixation selon l'une des revendications précédentes, **caractérisé en ce que** le second élément de verrou (40) inclut au moins un cran (49) qui est agencé de telle façon que le cran (49) est susceptible, dans la position de repos, d'être amené en engagement avec une portion (39) du cadre (20), afin de maintenir la griffe de verrouillage (12) dans la position de repos.

4. Moyen de fixation selon l'une des revendications précédentes, **caractérisé en ce que** le second élément de verrou (40) inclut, pour soutenir la griffe de verrouillage (12), au moins une portion de soutien convexe en direction longitudinale (X).

5. Moyen de fixation selon la revendication 4,
**caractérisé en ce que** le cadre (20) inclut au moins une réception concave, en particulier avec un prolongement (24a, 24a', 24b, 24b'), afin de recevoir la portion de soutien et afin de bloquer la griffe de verrouillage (12) dans la position de fixation.

6. Moyen de fixation selon l'une des revendications précédentes, **caractérisé en ce que** le cadre (20) inclut au moins une première tringle (21a) et une seconde tringle (21b), dans lesquelles la griffe de verrouillage (12) est montée avec mobilité en rotation, dans lequel les tringles (21a, 21b) incluent un guidage et au moins un organe d'enclenchement dans lequel la griffe de verrouillage (12) est agencée avec possibilité de translation en direction longitudinale (X).

7. Moyen de fixation selon la revendication 6,
**caractérisé en ce que** l'axe principal (36) inclut une douille avec au moins un tenon agencé mobile dans celle-ci, lequel s'engage dans un évidement ménagé sur le cadre pour fixer la griffe de verrouillage (12).

8. Moyen de fixation selon la revendication 6 ou 7,
**caractérisé en ce que** l'axe principal (36) inclut deux tenons et au moins un élément à ressort qui est en liaison d'action avec les tenons de telle manière que les tenons s'enclenchent dans des évidements ménagés sur le cadre (20).

9. Moyen de fixation selon l'une des revendications précédentes, **caractérisé en ce que** le second élément de verrou (40) a en section transversale une conformation sensiblement trapézoïdale, afin de soutenir la griffe de verrouillage (12) sur le cadre.

10. Moyen de fixation selon l'une des revendications précédentes, **caractérisé en ce que** la griffe de verrouillage (12) inclut une première butée qui est réalisée, dans la position de fixation, en correspondance d'une seconde butée sur le cadre (20) de telle façon qu'une force de soulèvement, agissant sur la griffe de verrouillage (12) dans la position de fixation, est susceptible d'être appliquée au cadre.
